# EUROPEAN PATENT SPECIFICATION

(11) **EP 3 181 253 B1**
(45) Date of publication and mention of the grant of the patent: **08.06.2022**
(21) Application number: 16204251.9
(22) Date of filing: 15.12.2016
(51) Int. Cl.: B21D 1/14, B21D 1/00

(54) **STRAIGHTENING MACHINE AND METHOD FOR MAGNESIUM COMPONENTS**
ABRICHTMASCHINE UND VERFAHREN FÜR MAGNESIUMBAUTEILE
MACHINE ET PROCÉDÉ À DRESSER DES COMPOSANTS DE MAGNÉSIUM

(30) Priority: 18.12.2015 US 201562269749 P
(43) Date of publication of application: 21.06.2017
(73) Proprietor: Magnesium Products of America, Inc., Eaton Rapids, MI 48827 (US)
(72) Inventor: Faupel, Tom, Mason, MI 48854 (US); Feltenbarger, Craig, Eaton Rapids, MI 48827 (US)
(74) Representative: Barker Brettell LLP

(56) References cited:
- CN-A- 104 785 576
- FR-A1- 2 492 302
- GB-A- 2 019 573
- US-A- 5 623 846
- US-A1- 2012 024 034

## Description

### SUMMARY

The invention relates to a machine for bending a cast or stamped component into compliance with dimension and tolerance requirements, as defined in claim 1.

The invention also relates to a method of truing a stamped or cast component for a vehicle, as defined in claim 8.

### BACKGROUND

To meet federal vehicle regulations and consumer preferences for ever-increasing fuel economy, vehicle manufacturers seek to reduce vehicle weight, while still satisfying various other, potentially competing regulations (e.g., safety) and consumer preferences (e.g., cost and quality). One manner by which vehicle manufacturers may reduce vehicle weight is by replacing vehicle components made from traditional materials (e.g., steel) with components made from other lighter weight materials (e.g., aluminum or magnesium and alloys thereof) with the biggest weight savings achieved by replacing heavier and/or larger components. With these new and/or larger-format applications of lighter materials, vehicle manufacturers and especially suppliers are being challenged with producing vehicle components in compliance with component dimension and tolerance requirements. For example, casting or stamping large-format magnesium (e.g., magnesium-alloy) components (e.g., vehicle lift gate frame or internal structure) may produce cast or stamped components that are warped relative to the vehicle manufacturer's dimension and tolerance requirements.

An example of a shaping tool for an automobile back door decoration plate is described in CN 104785576. The shaping tool comprises a worktable, a locating device, a pressing device and a shaping device. The pressing device comprises multiple pressing mechanisms. Each pressing mechanism comprises a pressing cylinder, a lever and a pressing block. A telescopic rod of each pressing cylinder is connected with one end of the corresponding lever, and each pressing block is connected to the other end of the corresponding lever. The shaping device comprises a shaping cylinder and shaping blocks which are connected to the telescopic rods of the shaping cylinders. In the shaping process, the cylinders are controlled to act to automatically press and shape the products.

From US2012/024034 A1 there is known a machine for bending a component, the machine comprising a base; at least one fixed holding device coupled to the base and configured to clamp the component; at least one bending device coupled to the base and configured to engage the component; and a control system configured to control the at least one fixed holding device and the at least one bending device during a manipulation routine; wherein the at least one fixed holding device is configured to hold the component in a predetermined spatial orientation relative to the base; and wherein the at least one bending device is configured to apply an upward and downward force to plastically deform the component.

### BRIEF DESCRIPTION OF THE DRAWINGS

FIG. 1 is a top plan view of a vehicle component shown in the form of a magnesium lift gate for a vehicle.
FIG. 2 is a plan view of a truing machine according to an exemplary embodiment.
FIG. 3 is another plan view of a truing machine having a vehicle component provided thereon according to an exemplary embodiment.
FIG. 4 is a flow diagram showing a method of truing a component according to an exemplary embodiment.

### DETAILED DESCRIPTION

According to an exemplary embodiment, manufacturing equipment and processes are provided to produce a cast or stamped magnesium component in compliance with a manufacturer's dimension and tolerance requirements. The manufacturing equipment and processes contemplated herein generally include a post-forming or stamping truing machine and process, which holds and bends, at various locations or regions, a magnesium component that is initially warped (i.e., after casting or stamping, has a static form outside the vehicle manufacturer's dimension and tolerance requirements) to become trued (i.e., after truing has a static form that is within the manufacturer's requirements). More specifically, and as discussed in further detail below, the equipment and processes require holding a component in a fixed, known orientation and applying forces at various locations of the component to bend the component into compliance with the manufacturer's requirements.

The manufacturing equipment and process may also include casting or stamping equipment/processes (e.g., molds or dies, etc., and related processes for forming the component), other post-forming equipment/processes (e.g., machining and/or attachment equipment and processes, for example, to create apertures or other features with greater precision than possible during the casting or stamping processes), and/or line transport equipment/processes (e.g., to move components from a moving assembly line or other location to and/from the truing machine).

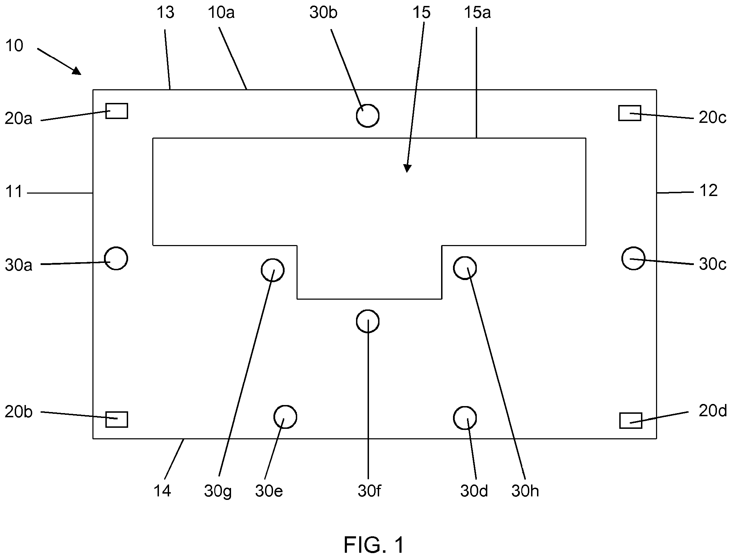

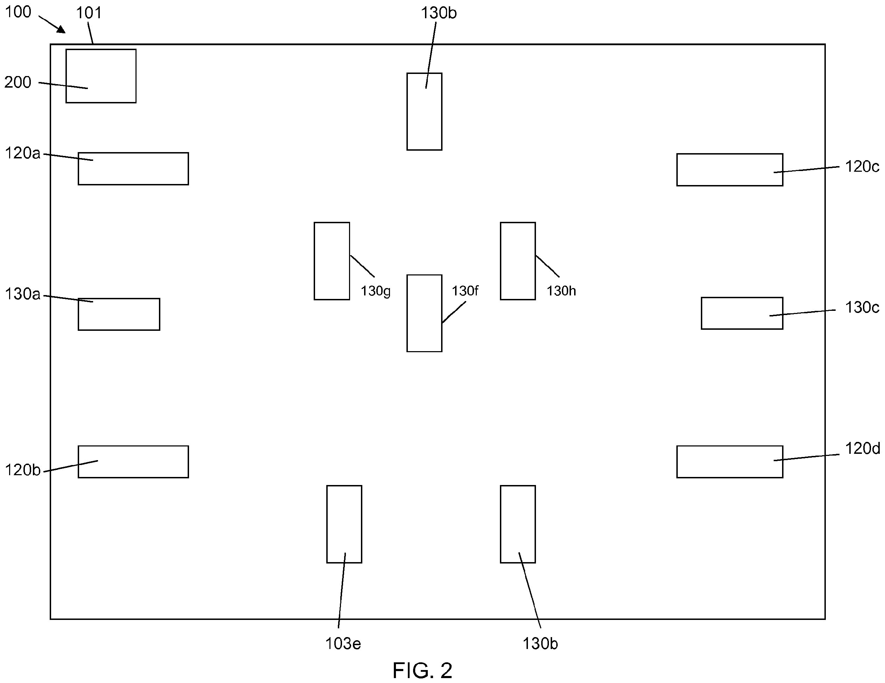

With reference to FIGS. 1 and 2, as an example, the component 10 (depicted schematically) may be a magnesium lift gate frame for a vehicle, which forms an internal structure of a lift gate assembly to provide various structural properties to the lift gate assembly (e.g., crash energy absorption, attachment points and features, etc.). The lift gate frame has a generally rectangular periphery 10a (i.e., having predominant left 11, right 12, upper 13, and lower 14 edges or sides) and is generally flat, albeit with a three-dimensional profile (e.g., various protrusions, recesses, varying thickness, etc. for structural, attachment, and various other functional and/or aesthetic purposes). For example, the lift gate frame may include various recesses, protrusions, and/or other curvatures but still be relatively flat with all surfaces of the lift gate frame being within a few inches (e.g., +/- approximately 5 inches) or a relatively small distance (e.g., +/- approximately 20% of a maximum distance between left 11 and right 12, or top 13 and bottom 14, sides of the lift gate frame) of a single plane passing through the lift gate. The lift gate frame may also include a central large aperture 15 (e.g., to accommodate a rear window of a vehicle). The aperture 15 may have a generally continuous inner periphery 15a (e.g., having a predominant concave curvature relative to a center of the aperture 15), or may include, as shown, protrusions extending toward the center of the aperture 15 (e.g., the aperture periphery 15 having features with a convex curvature protruding toward the center of the aperture).

While the equipment and processes are discussed herein both generically and with respect to cast or stamped magnesium vehicle lift gate frames, it is contemplated that such equipment and processes are also applicable to other materials having similar manufacturing challenges or properties (e.g., casting or stamping properties, such as warping, for example, with aluminum), other types of vehicle components (e.g., structure, frame, or panel for doors, roof, hoods, body panels, etc.), other shapes and profiles (e.g., other peripheral shapes, greater/lesser three-dimensional profiles, etc.), and other product categories (e.g., non-automotive components).

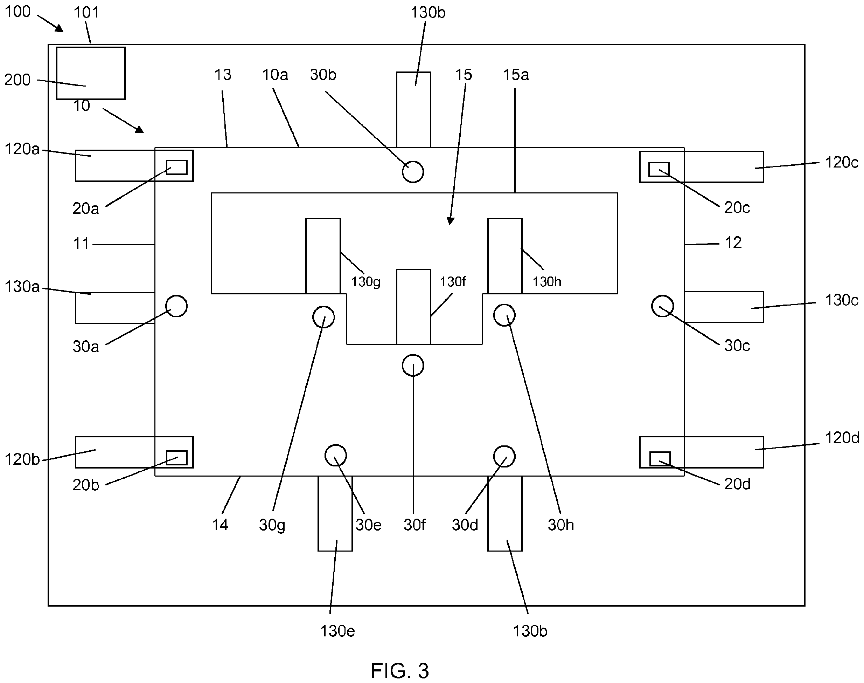

The truing machine 100 is configured to receive the component 10, hold the component 10 at various locations, evaluate the component 10, and apply forces at various locations about the component 10 to bring the component 10 into compliance with the manufacturer's dimension and tolerance requirements. As discussed in further detail below with respect to FIG. 3, the truing machine 100 generally includes a plurality (i.e., series, at least one, etc.) of holding or clamping devices 120 to receive and hold (i.e., secure, engage, clamp, etc.) the component 10, a plurality (i.e., series, at least one, etc.) of manipulation or bending devices 130 that apply a force to bend the component 10, and a control system 200 that evaluates each component 10 and controls the holding devices 120 and/or the bending devices 130 to manipulate or bend the component 10 into compliance with the manufacturer's dimension and tolerance requirements.

In order to receive and hold the component 10, the truing machine 100 is configured as a fixture having a table (i.e., base) 101 including a plurality of holding devices 120 that receive and hold the component 10 at various locations. For example, the truing machine 100 may include holding devices 120a, 120b, 120c, and 120d, which are configured to receive and hold the component 10 at various datums 20 (i.e., datum or reference points or locations) of the component 10. Each holding device 120 may either be a fixed holding device (e.g., 120a, 120b, 120c) that is configured to hold the component 10 at a corresponding datum 20 initially and continuously throughout a manipulation process in a predetermined position (i.e., X-, Y-, and Z-axes coordinates relative to the table 101 or other fixed component of the truing machine 100), or the holding device 120 may be a bending (i.e., articulating, manipulating, moving, etc.) holding device (e.g., 120d) that moves a corresponding datum 20 (i.e., articulating datum 20d) relative to the fixed holding devices to a target location (e.g., bending the component 10 to within the manufacturer's requirements) and thereafter holds the datum 20 at the target location through the reminder of the manipulation process. The fixed holding devices 120 may, for example, include a bottom member that is fixed to the table 101 so as to receive a corresponding datum 20 of the component 10 in the predetermined location, or may otherwise be configured to hold the datum 20 to the predetermined location prior to the manipulation or bending process (e.g., the fixed holding devices may grab and move the component 10 with the datums 20 moving to an initial predetermined orientation). To hold the component 10, each holding device 120 may be include gripping or clamping tools (e.g., clamps, grips, pads, etc.) that grip or compress the component 10 at the datum 20. Movement and actuation of the holding devices 120 (e.g., for gripping/holding, or to move the component 10 into position) may occur through the use of servo motors, pneumatic actuation, hydraulic actuation, and/or any other suitable method or means.

By holding the three datums 20a, 20b, and 20c with the three fixed holding devices 120a, 120b, 120c, respectively, the truing machine 100 fixes the datums 20a, 20b, 20c into a known spatial relationship (i.e., a known plane) with little or no deformation (e.g., elastic or plastic) of the component 10. This advantageously allows for the control system 200 to both evaluate the component 10 relative to the manufacturer's dimension and tolerance requirements within a known spatial coordinate system, and thereafter apply forces to bend the component 10 in a precise manner. It should be noted that while three fixed holding devices 120a, 120b, 120c and one bending holding device 120d are shown and described, it is contemplated that more or fewer of either type of holding device 120 may be included.

The truing machine 100 also includes a plurality (i.e., at least one, series, etc.) of manipulation or bending devices 130, which are configured to engage and apply a force against a portion of the component 10, so as to manipulate or bend the component 10 into compliance with the manufacturer's dimension and tolerance requirements. In contrast to the holding devices 120, which are configured to receive and hold the datums 20 in fixed positions during the duration of the bending or manipulation process, the bending devices 130 are configured to engage the component 10 at bending locations 30 (e.g., region, portion, location, etc.) only for a limited time that is less than the duration of the entire bending process. For example, after the component 10 is received by the holding devices 120 and while the component 10 is held by the holding devices 120, a first bending device 130a applies and releases a force against a first bending location 30a of the component 10, then a second bending device 130b applies and releases another force against a second bending location 30b of the component 10, and so on (depending on the number of bending devices 130 and bending locations 30). That is, the bending devices 130a and 130b may operate sequentially, or according to other firing or actuation sequences as described in further detail below.

The bending devices 130 are generally positioned at locations of the table or fixture 101 of the truing machine 100 proximate to the corresponding bending location. The portions of each bending device 130 are configured to move relative to the table 101 so as to avoid obstructing the component 10 as it is moved (e.g., placed onto and removed from the truing machine 100) and so as to engage component 10 at bending locations 30. For example, the bending devices 130 may be configured for portions thereof to move generally horizontally (e.g., in X- and or Y-axes, or within approximately 25 degrees of a horizontal plane) to avoid obstructing the component 10 during placement and removal thereof and to engage or disengage the component 10. Further, the bending devices 130 may be configured to move generally upward and downward (e.g., in the Z-axis, or within approximately 25 degrees of vertical), so as to engage and apply a bending force against the corresponding bending location 30 of the component 10. In order to apply either an upward or downward force, the bending device 130 may include static or actuable tools or fittings to grasp an edge (e.g., of the inner or outer periphery 10a, 15a of the component 10), so as to pull upward on the component 10 (i.e., to apply an upward force) and/or push downward on the component 10 (i.e., to apply a downward force).

Individual bending devices 130 may be provided for each bending location 30 identified for applying force thereto to bend the component 10 into compliance with the manufacturer's dimension and tolerance requirements. For example, one or more bending devices 130 may be provided along the outer periphery 10a of the component 10 between the holding devices 130, which are configured to apply a generally vertical force against the component 10 at bending locations (e.g., 30a, 30b, 30c, 30d, and 30e) along the outer peripheral edge (e.g., within approximately 4 inches of the edge of the outer periphery 10a) of the component 10. One or more additional bending devices 130 may be provided along the inner periphery 15a of the component 10 (i.e., within approximately 4 inches of the edge of the inner periphery 15a), so as to apply a generally vertical force against a bending location 30f on an inner portion of the component 10 and/or against bending locations 30g, 30h corresponding to protrusions of the component 10 extending toward a center of the aperture 15.

The truing machine 100 also includes a control system 200 that is configured to evaluate each component 10 and control the holding devices 120 and the bending devices 130. That is, the control system 200 controls the truing machine 100 to execute a method for evaluating and manipulating the component 10 into compliance with the manufacturer's dimension and tolerance requirements.

To evaluate each component, the truing machine 100 includes a measurement system 210 that includes a plurality (i.e., at least one, series, etc.) of measurement devices 211 configured to measure the component 10 at predetermined locations, such as at datums 20 (i.e., where the holding devices 120 engage the component 10) and at bending positions 30 (i.e., where the bending devices 130 engage the component 10). The measurement devices 211 may each be laser-based and configured to measure a location of one of more of the datums 20 and/or regions 30 of the component 10 having an accuracy of at least 0.1 mm. For example, the measurement devices 211 may measure a vertical position (i.e., Z-axis position) of the datums 20 and/or the regions 30 of each component 10 held by the holding devices 120 within a fixed coordinate system (e.g., defined relative to the fixture or table 101 of the truing machine 10). The measurement devices 211 may, for example, be provided with each of the holding devices 120 and/or bending devices, for example, by being coupled directly thereto or provided as part of an assembly therewith. According to other exemplary embodiments, the measurement devices may be another type of measurement device (e.g., other optical or force-based measurement devices), have lesser or greater accuracy, measure other position parameters (e.g., X- and Y-axis positions), be provided in other manners (e.g., standalone and/or separate from the holding devices 120 and/or bending devices 130), be provided in different numbers (e.g., 1:1 ratio with the datums 20 and/or regions 30, etc.), provided in a lesser or greater number than the datums 20 and/or regions 30, and/or be provided with different capabilities (e.g., to measure multiple different datums 20 and/or regions 30, including regions that do not correspond holding devices 120 or bending devices 130). It should additionally be noted that for datums 20 corresponding to fixed holding devices 120 (i.e., those that hold datums 20 in a predetermined relationship relative to the table 101 of the truing machine 100), the location of the datums 20 of the component 10 are already known, such that measurements for those datums 20 may not be required.

The control system 200 collects measurements of the component 10 from the measurement system 210 and then evaluates the component 10 to determine whether it is in compliance with the manufacturer's dimension and tolerance requirements. For example, the control system 200 may compare each measurement (e.g., the Z-axis measurement at each datum 20 or bending location 30) to a manufacturer's specification (e.g., within a range, for example +/-2.0 mm) for such a location on the component 10 (e.g., as compared to a perfect or model component). If the component 10 satisfies the manufacturer's requirements, the component 10 is removed from the truing machine 10 for use in a vehicle assembly. If the component 10 does not satisfy the manufacturer's requirements, as discussed in further detail below, the control system 200 determines a manipulation routine according to which the control system 200 moves the holding devices 120 and/or bending devices 130 to manipulate or bend the component 10 into conformity with the manufacturer's requirements. After executing the manipulation routine, the control system 200 then evaluates the component 10 (i.e., takes measurements using the measurement system 210) a second time to assess whether the component 10 satisfies the manufacturer's requirements. If compliant, the component 10 is removed from the truing machine for use in a vehicle assembly. If non-compliant, the control system 200 determines, based on the measurements, and executes a second manipulation routine, then evaluates the component a third and final time to assess whether the component 10 satisfies the manufacturer's requirements. If compliant, the component 10 is removed for use in a vehicle assembly. If non-compliant after executing the second manipulation routine, the component 10 is discarded. According to other exemplary embodiments, the control system 200 may assess and execute a manipulation routine more or fewer times prior to discarding non-compliant components 10, for example, depending on throughput and scrap requirements or targets.

If, based on a first or second assessment, the component 10 is non-compliant with the manufacturer's requirements, the control system 200 determines a manipulation routine for manipulating or bending the specific component 10 with the holding devices 120 and/or the bending devices 130. Each specific manipulation routine may be based, in part, on modeled data (e.g., finite element analyses and simulations of bending non-compliant computer models of components) and collected manufacturing data (e.g., trends observed or assessed for a lot or run of parts). Each manipulation may be defined by various parameters, including total location displacement or position (i.e., total movement of the datum 20 and/or bending location 30, or the holding device 120 and/or bending device 130, when actuated), force application (i.e., the manner by which the holding devices 120 and/or bending devices 130 engage and apply force to the component 10), and firing sequence (e.g., order and/or synchrony of holding devices 120 and/or bending devices 130 applying force at the datums 20 and/or bending locations 30 to bend the component 10).

Regarding the total displacement parameter, each manipulation routine as determined by the control system 200 includes a total displacement parameter for each datum 20 and/or bending location 30 of the component 10 at which the truing machine 100 (i.e., the holding devices 120 and/or bending device 130) applies a force for bending the component 10. More specifically, since the component 10 is held and fixed at datums 20 by several (e.g., three or four) holding devices 120 in known spatial locations (i.e., relative to the fixture or table 101 of the truing machine 100), each manipulation routine includes a total displacement parameter for each other datum 20 (i.e., datums 20 not yet held in a known position) or bending location 30 to which the corresponding holding device 120 or bending device 130 moves such datum 20 or bending location 30 of the component 10 (e.g., by applying a generally vertical force). Due to elasticity and plasticity of the material forming the cast or stamped component 10, the total displacement parameter may be greater than a distance between the measured position of the datum 20 or bending location 30 and the manufacturer's requirements, such that the holding device 120 or bending device 130 moves or displaces the datum 20 or bending location 30 beyond (i.e., past or further than) the manufacturer's component requirements (i.e., the component 10 is not coined or forced just to the manufacturer's component requirements and no further). That is, the total displacement parameter is configured to provide additional displacement to provide sufficient plastic deformation of the component 10, such that when force is released from the datum 20 or bending location 30, the component 10 relaxes (i.e., due to material elasticity) into a static position within the manufacturer's requirements. For example, if a given bending location is +2.0 mm out of specification (e.g., in the Z-axis), the total displacement parameter may be -6.0 mm, such that the bending device 130 moves the bending location 30 by -6.0 mm (i.e., downward in the Z-axis), which is 4.0mm past the manufacturer's requirements. Thereafter, when the force against the bending location 30 is removed, the component 10 relaxes to a static condition with the bending location 30 moving to with the manufacturer's requirements. Additionally, because plastically moving one or more datums 20 and/or bending locations 30 in different sequences may plastically move another datum 20 and/or bending location 30 in different manners, each total displacement parameter may be determined within the overall manipulation or bending routine and not in isolation of other total displacement parameters or firing sequence. Furthermore, the firing sequence and resultant prior plastic deformation may result in that the datum 20 and/or bending location 30 of the component 10 being displaced after measurement but prior to the associated bending device 130 applying a force thereto. As such, it may be advantageous to define the total displacement parameter or position, as a final position in real space (i.e., relative to the table 101) or as a delta relative to the originally measured position.

Regarding the force application, the manipulation routine may provide stepped displacement and/or include a ramp up, hold, and ramp down periods for displacing the each datum 20 and/or bending location 30 to the total displacement position. For stepped displacement, rather than having the holding device 120 or bending device 130 necessarily move the datum 20 or bending location 30 to the final displacement parameter or position in one step (i.e., continuous motion or operation), the datum 20 or bending location 30 is first moved only a portion of the total displacement, then the applied force is lessened or removed entirely so as to allow the component 10 to relax partially or completely, before reapplying a force to move the datum 20 or bending location 30 further toward the total displacement position. For example, if the total displacement parameter for a bending location 30 is -10.0 mm (i.e., downward in the Z-axis) and the step distance is 2.0 mm, the bending device 130 may first move the bending location to -2.0 mm (i.e., downward in the Z-axis), then lessen the force (e.g., to allow the component 10 to fully or partially relax), then move the bending location to -4.0 mm, then lessen the force, the move the bending location to -6.0 mm, and so on until the -10.0 total displacement parameter is achieved. The force is then removed and the component 10 allowed to relax into a static position.

For ramped displacement, the holding devices 120 and/or bending devices 130 may move at different rates for engaging, moving, and disengaging the component 10. For example, during ramp up period, the holding device 120 or bending device 130 may initially move at a relatively slow rate (i.e., distance per unit time, such as mm/s), so as to engage and/or initially move the datum 20 or bending location 30 of the component 10 relatively slowly and then gradually increase its speed over a displacement period (e.g., 0.1 seconds) during which the datum 20 or bending location 30 is moved to its total displacement position or to its stepped position (i.e., when stepped and ramped displacement are combined). Having an initially slow movement rate may, for example, avoid engaging the component at too high a rate of speed, especially if the firing sequence caused prior plastic deformation and moved the given datum 20 or bending location 30 from its originally measured position. During the hold period, the holding device 120 or bending device 130 may hold each datum or bending location 30 of the component 10 at the total displacement parameter for limited hold period or duration (e.g., 0.05 seconds). During the ramp down period, the holding device 120 or bending device 130 moves away from the total displacement parameter or position at an initially relatively fast speed and then gradually decrease over the total ramp down movement period (e.g., 0.1 seconds). According to other exemplary embodiments, the ramp up, hold, and ramp down periods may be configured differently, for example, by having longer or shorter durations, having a constant movement rate, having movement rates determined according to measured forces (as opposed to time), etc.

As noted above, the firing sequence (i.e., the sequence in which the holding devices 120 and/or the bending devices 130 engage and displace the datums 20 and/or bending locations 30) causes plastic deformation of component 10 in a sequential manner. The firing or actuation sequence may be configured in various different manners with various different parameters, including simultaneous firing or actuation of none, some, or all holding devices 120 and/or bending devices 130, and firing in a spatially continuous or disrupted sequence (i.e., actuating in sequence, or not, around the inner or out perimeters 10a, 15a of the component 10).

For any bending holding devices (e.g., 120d), which are configured to move and bend the component 10 and thereafter hold the component 10 at a corresponding datum 20d, the bending routine may include actuating the bending holding device 120d prior to any bending devices 130, which bend but do not hold the component 10. In the bending routing, any bending holding device 120d will engage the component 10 at the corresponding datum 20d and apply a force thereto to displace the datum 20d to its determined maximum displacement position (e.g., with or without stepped and/or ramped displacement). The applied force is then lessened or removed to allow the component 10 to relax to allow the datum 20d to move to and be held in a fixed position with the manufacturer's requirements for the remainder of the bending routine. Alternatively, the bending holding device 120d may be configured to actively move the datum 20d to within the manufacturer's requirements (i.e., as opposed to such movement occurring through elasticity of the component 10).

Additionally, control system 200 may be configured to determine and execute the manipulation routine in its entirety (e.g., moving all bending holding devices 120d and all bending devices 130) before reevaluating the component. That is, the control system 200 does not reevaluate or react after movement of individual or a subset of bending holding devices 120d and/or bending devices 130. According to other exemplary embodiments, remeasure, reevaluate, and react by redetermining or reconfiguring a manipulation routine more granularly after moving one or a larger subset of the bending holding devices 120d and/or bending devices 130.

While the truing machine 100, including its holding devices 120, bending devices 130, and control system 200, are discussed in broad terms above, following is a description of an exemplary embodiment of a truing machine 100 with reference to the component 10 and a method of bending or truing the component 10 with the truing machine 100 into compliance with a manufacturer's dimension and tolerance requirements.

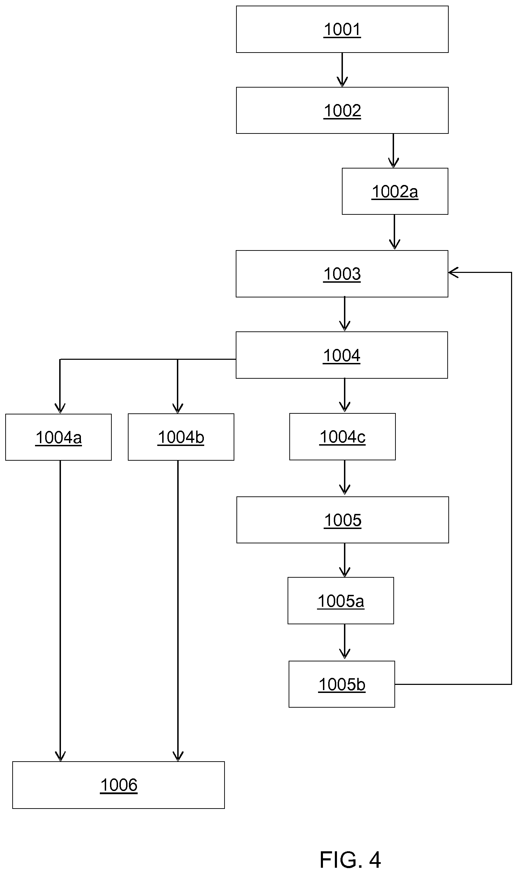

Referring now to FIG. 4, according to an exemplary embodiment, the truing machine 100 as described above includes an associated method configured for truing a component 10 that is a cast or stamped magnesium lift gate frame. The truing machine 100 includes four holding devices 120a, 120b, 120c, and 120d, which correspond to four datums 20a, 20b, 20c, and 20d, respectively, of the component 20. Three of the holding devices 120a, 120b, and 120c are each configured as fixed holding devices, which prior to and through any bending process, hold the datums 20a, 20b, 20c in a predetermined relationship (i.e., in a known relationship relative to the table 101 of the truing machine). The fourth holding device 120d is configured as a bending holding device, which as part of the manipulation process will first bend the component 10, and thereafter hold the component 10 at datum 20d for the remaining duration of the bending process or routine.

The truing machine 100 also includes at least five bending devices 130, which include at least one bending device 130a, 130b, 130c, and 130d positioned between the holding devices 120a, 120b, 120c, and 120d outside along an outer periphery of the component 10, and include at least one bending device 130f positioned within the outer periphery of the component 10 (e.g., through aperture 15) so as to engage an interior peripheral portion of the component 10.

In a first step 1001, the truing machine 100 receives a component 10, for example, from a robotic arm that moves the component 10 from a moving conveyer or other source.

In a second step 1002, the fixed holding devices 120a, 120b, 120c begin hold the component 10 at at least the three corresponding datums 20a, 20b, and 20c in the known spatial orientation (i.e., the known plane defined by the predetermined locations of the datums 20a, 20b, and 20c in the holding devices 120a, 120b, 120c at fixed X-, Y-, and Z-positions). The component 10 may either be received in the predetermined orientation during the first step 1001, or as part of the second step, for example as substep 1002a, be moved into the known spatial orientation).

In a third step 1003, the control system 200, by way of its measurement system or devices, measures the component 10, for example, by determining a vertical height (e.g., Z-axis position) at each non-held datum (e.g., datum 20d) and each bending location 30.

In a fourth step 1004, the control system 200 evaluates the component 10 by comparing one or more of the measurements obtained in step 1003 to the manufacturer's requirements, determines whether the component 10 is in compliance (e.g., if all measurements are within the manufacturer's requirements), and decides how to handle the component.

In a first substep 1004a, if the component 10 is in compliance, the control system 200 accepts the component 10.

In a second substep 1004b, if the component 10 is non-compliant and has already undergone a threshold number of manipulation or bending processes (e.g., preferably two processes), the control system 200 discards the component 10.

In a third substep 1004c, if the component is non-compliant and has not already undergone the threshold number of manipulation or bending processes (e.g., the component 10 has not yet undergone and/or has undergone only one bending processes), the control system determines a manipulation process or routine. In determining the manipulation routine, the control system 200 evaluates the measurements of the component 10 taken during the third step 1003 and determines a maximum displacement parameter or position for each datum 20d that corresponds to a bending holding device 120d and for each bending positon 30 that corresponds to a bending device 130, for example, using one or more look-up tables and/or algorithms based on modeled component data (e.g., computer models and finite element analyses) and manufacturing data (e.g., learning for an individual run or lot of components, or larger number of components). Again, and as described above, the maximum displacement parameter position includes moving the corresponding datum 20d or bending location 30, relative to its measured position, to beyond the manufacter's required position (i.e., such that the component 10 relaxes and its elasticity moves the datum 20d or bending location 30 to within the manufacturer's requirements). The control system 200 may incorporate into the manipulation routine ramped actuation (i.e., having variable movement speed and/or hold times) and/or stepped actuation (i.e., alternating increased movement and force lessening for reaching the maximum displacement position).

The control system 200 may also determine a firing or actuation sequence for the manipulation routine. However, the actuation sequence may be predetermined, such that all manipulation routines for each different component 10 includes the same actuation sequence. The actuation sequence as actively determined by the control system 200 or as predetermined may be based, in part, on modeled data and/or manufacturing data.

Furthermore, the actuation sequence may include first actuating the bending holding device 120d before and in a different manner than actuating any bending devices 130. In particular, the bending routine may include actuating the bending holding device 120d to first move the corresponding datum 20d to a maximum displacement parameter (i.e., with or without ramped or stepped displacement), then move the datum 20d to within the manufacturer's requirements (e.g., either by allowing the component 10 to relax and/or actively moving the datum 20d), and then holding the datum 20d in this fixed location for the remaining duration of the bending routine.

In a fifth step 1005, the control system 200 executes the manipulation routine by moving the one or more bending holding devices 120d and the bending devices 130 according to the bending routine. In a first substep 1005a, the control system 200 causes the bending holding device 120d to move the corresponding datum 20d of the component 10 to its determined maximum displacement position, then hold the datum 20d at a fixed position with the manufacturer's specification and tolerance requirements for the component 10. After the first substep 1005a, in a series of at least five second substeps 1005b, the control system 200 causes the bending devices 130 to sequentially move the corresponding bending locations 30 of the component 10 to their determined maximum displacement positions. After the series of second substeps 1005b, the control system 200 causes the bending holding device 120d to release the datum 20d.

After the fifth step 1005, step 1003 to measure the component 10 and step 1004 to assess the component 10 are repeated.

In a sixth step 1006, the component 10 is removed from the truing machine 100 (i.e., if the component 10 is assessed as being compliant according to substep 1004a, or is assessed to be discarded according to substep 1004b). And then the procedure begins again at step 1001 for a new component 10.

Although each of the steps 1001, 1002, 1003, 1004, 1005, and 1006 are described as first, second, third, etc. steps, it should be noted that the steps 1001, 1002, 1003, 1004, 1005, and 1006 may be performed in other orders, according to various exemplary embodiments.

According to an exemplary embodiment, a machine for bending a cast or stamped component into compliance with dimension and tolerance requirements includes a base and three fixed holding devices coupled to the base and configured to each hold one of three corresponding datums of each component of a series of components in a predetermined spatial orientation relative to the base. The machine further includes a bending device coupled to the base and configured to engage a corresponding bending position of each component of the series of components, and a control system. The control system is configured to cause the three fixed holding devices to hold the three datums of each component in the predetermined spatial orientation, perform a measurement of each component at the bending position, perform an assessment based on the measurement of whether the component satisfies a component specification, determine a bending routine based on the measurement for each component, and according to the bending routine for that component, cause the bending device to engage the component at the bending position to plastically bend the component into compliance with the component specification and to disengage the component.

According to an exemplary embodiment, the machine further includes a bending holding device corresponding to a fourth datum of each component, wherein the control system is configured cause according to the bending routine the three fixed holding devices to hold the three datums in the predetermined spatial orientation and simultaneously cause the bending holding device to engage the component at the fourth datum to plastically bend the component into compliance with the component specification and to hold the fourth datum in a position in compliance with the component specification.

According to an exemplary embodiment, the machine further includes three additional bending devices coupled to the base and configured to engage one of three additional corresponding bending positions of each component, wherein the control system is configured to cause according to the bending routine the three fixed holding devices to hold the three datums in the predetermined spatial orientation and simultaneously cause each of the three additional bending devices to engage the component at the corresponding bending position to plastically bend the component into compliance with the component specification and to disengage the component.

According to an exemplary embodiment, the first bending position and the three additional bending positions are each located about an outer periphery of the component. According to another exemplary embodiment, at least one of the first bending position or the three additional bending positions is located about an inner periphery of the component.

According to an exemplary embodiment, in determining the bending routine, the control system includes determining a displacement parameter for the each bending position, and in executing the bending routine, the control system causes each bending device to displace the corresponding bending position of the component a distance equal to the displacement parameter away from the measurement the bending position. According to another exemplary embodiment, each displacement parameter is greater than a distance between the measurement of the bending position and specification compliant position. According to another exemplary embodiment, in executing the bending routine, the control system causes each bending device to displace the corresponding bending position in a stepped manner. According to another exemplary embodiment, wherein in executing the bending routine, the control system causes each bending device to hold the corresponding bending position of the component for a predefined duration. According to another exemplary embodiment, in executing the bending routine, the control system causes the bending devices to engage the corresponding bending positions of the component sequentially.

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that the term "exemplary" as used herein to describe various embodiments is intended to indicate that such embodiments are possible examples, representations, and/or illustrations of possible embodiments (and such term is not intended to connote that such embodiments are necessarily extraordinary or superlative examples).

The terms "coupled," "connected," and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

References herein to the positions of elements (e.g., "top," "bottom," "above," "below," etc.) are merely used to describe the orientation of various elements in the FIGURES. It should be noted that the orientation of various elements may differ according to other exemplary embodiments, and that such variations are intended to be encompassed by the present disclosure.

It is important to note that the construction and arrangement of the various exemplary embodiments are illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. For example, elements shown as integrally formed may be constructed of multiple parts or elements, the position of elements may be reversed or otherwise varied, and the nature or number of discrete elements or positions may be altered or varied. The order or sequence of any process or method steps may be varied or resequenced according to alternative embodiments. Other substitutions, modifications, changes and omissions may also be made in the design, operating conditions and arrangement of the various exemplary embodiments without departing from the scope of the present invention, as defined by the claims.

## Claims

1. A machine (100) for bending a cast or stamped component (10) into compliance with dimension and tolerance requirements, the machine (100) comprising:
a base (101);
at least one fixed holding device (120) coupled to the base (101) and configured to clamp a corresponding datum (20) of the component (10);
at least one bending device (130) coupled to the base (101) and configured to engage a corresponding bending datum (20) of the component (10);
an articulating holding device (120d) configured to clamp the component (10) at a corresponding articulating datum (20d) and configured to move the articulating datum (20d) to a target location;
and
a control system (200) configured to control the at least one fixed holding device (120) and the at least one bending device (130) during a manipulation routine;
wherein the at least one fixed holding device (120) is configured to hold the component (10) in a predetermined spatial orientation relative to the base (101); and
wherein the at least one bending device (130) is configured to apply an upward and downward force to plastically deform the component (10).

2. The machine (100) according to claim 1, wherein the articulating holding device (120d) is configured to hold the articulating datum (20d) in the target location during the manipulation routine.

3. The machine (100) according to claim 2, wherein the at least one fixed holding device (120) includes first, second, and third fixed holding devices (120a, 120b, 120c) configured to hold the component (10) at first, second, and third datums (20), respectively; and
wherein the first, second, and third fixed holding devices (120a, 120b, 120c) and the articulating holding device (120d) are positioned proximate to an outer periphery (10a) of the component (10).

4. The machine (100) according to claim 3, wherein the at least one bending device (130) includes four bending devices (130a, 130b), each bending device configured to engage a bending location (30a... 30e) disposed proximate to the outer periphery (10a) of the component (10), between any of the first, second, and third fixed holding devices (120a, 120b, 120c) and the articulating holding device (120d).

5. The machine (100) according to any preceding claim, wherein the at least one bending device (130) is configured to engage a bending location (30f) disposed proximate to an inner periphery (15a) defining a central aperture in the component (10).

6. The machine (100) according to any preceding claim, further comprising at least one measurement device (211) configured to measure, relative to a fixed coordinate system defined by the base (101), a location of at least one datum (20).

7. The machine (100) according to claim 6, wherein the control system (200) is configured to measure the component (10) using the at least one measurement device (211) and determine the manipulation routine based on output from the at least one measurement device (211).

8. A method of truing a stamped or cast component (10) for a vehicle using a machine (100) according to any preceding claim, the method comprising:
receiving (1001) the component (10) in the machine (100);
clamping (1002) the component (10) at first, second, and third datums (20a, 20b, 20c) with first, second, and third holding devices (120a, 120b, 120c), respectively, in the predetermined spatial orientation;
measuring (1003) with at least one measurement device (211), at least one of a fourth datum (20d) of the component (10) or a bending location (30) of the component (10);
evaluating (1004) measurements from the at least one measurement device (211) for compliance with predetermined dimensional requirements;
applying, with a bending device, an upward and downward force to plastically deform the component;
clamping, with the articulating holding device (120d), the fourth datum 20d in a position in compliance with the dimensional requirements;
determining (1004c), based on the measurements, the manipulation routine; and
performing (1005) the manipulation routine configured to bring the component (10) within the dimensional requirements.

9. The method according to claim 8, further comprising moving the fourth datum (20d) with the articulating holding device (120d) to the target location.

10. The method according to claim 8 or claim 9, further comprising moving a plurality of bending locations (30a... 30e) with a plurality of corresponding bending devices (130).

11. The method according to claim 9 or claim 10, further comprising determining maximum displacement parameters, such that movement of the fourth datum (20d) or the plurality of bending locations (30a... 30e) to a maximum displacement based on the maximum displacement parameters results in plastic deformation of the component (10).

12. The method according to claim 11, wherein the maximum displacement defines a position not in compliance with the dimensional requirements.

13. The method according to any of claims 8 to 12, further comprising measuring, with the at least one measurement device (211), the at least one of a fourth datum (20d) of the component (10) or a bending location (30) of the component (10); and
performing an additional manipulation routine if measurements from the at least one measurement device (211) are not in compliance with the dimensional requirements.

## Patentansprüche

1. Maschine (100) zum Krümmen einer gegossenen oder gestanzten Komponente (10), um Abmessungs- und Toleranzanforderungen zu erfüllen, wobei die Maschine (100) Folgendes umfasst:
eine Basis (101);
mindestens eine fixierte Halterungsvorrichtung (120), die mit der Basis (101) gekoppelt und dazu ausgelegt ist, einen zugehörigen Bezugspunkt (20) der Komponente (10) einzuspannen;
mindestens eine Krümmungsvorrichtung (130), die mit der Basis (101) gekoppelt und dazu ausgelegt ist, in einen zugehörigen Bezugspunkt (20) der Komponente (10) einzugreifen;
eine gelenkige Halterungsvorrichtung (120d), die dazu ausgelegt ist, die Komponente (10) an einem zugehörigen gelenkigen Bezugspunkt (20d) einzuspannen, und dazu ausgelegt ist, den gelenkigen Bezugspunkt (20d) an eine Zielposition zu bewegen;
und
ein Steuerungssystem (200), das dazu ausgelegt ist, die mindestens eine fixierte Halterungsvorrichtung (120) und
die mindestens eine Krümmungsvorrichtung (130) während eines Bearbeitungsvorgangs zu steuern;
wobei die mindestens eine fixierte Halterungsvorrichtung (120) dazu ausgelegt ist, die Komponente (10) in einer festgelegten räumlichen Ausrichtung in Bezug zur Basis (101) zu halten; und
wobei die mindestens eine Krümmungsvorrichtung (130) dazu ausgelegt ist, eine aufwärts und abwärts wirkende Kraft aufzubringen, um die Komponente (10) plastisch zu verformen.

2. Maschine (100) nach Anspruch 1, wobei die gelenkige Halterungsvorrichtung (120d) dazu ausgelegt ist, den gelenkigen Bezugspunkt (20d) während des Bearbeitungsvorgangs an der Zielposition zu halten.

3. Maschine (100) nach Anspruch 2, wobei die mindestens eine fixierte Halterungsvorrichtung (120) eine erste, zweite und dritte fixierte Halterungsvorrichtung (120a, 120b, 120c) umfasst, die dazu ausgelegt sind, die Komponente (10) an einem ersten, zweiten bzw. dritten Bezugspunkt (20) zu halten; und
wobei die erste, zweite und dritte fixierte Halterungsvorrichtung (120a, 120b, 120c) und die gelenkige Halterungsvorrichtung (120d) in der Nähe eines Außenumfangs (10a) der Komponente (10) angeordnet sind.

4. Maschine (100) nach Anspruch 3, wobei die mindestens eine Krümmungsvorrichtung (130) vier Krümmungsvorrichtungen (130a, 130b) umfasst, wobei jede Krümmungsvorrichtung dazu ausgelegt ist, in eine Krümmungsposition (30a...30e), die in der Nähe des Außenumfangs (10a) der Komponente (10) angeordnet ist, zwischen beliebigen der ersten, zweiten und dritten fixierten Halterungsvorrichtung (120a, 120b, 120c) und der gelenkigen Halterungsvorrichtung (120d) einzugreifen.

5. Maschine (100) nach einem der vorstehenden Ansprüche, wobei die mindestens eine Krümmungsvorrichtung (130) dazu ausgelegt ist, in eine Krümmungsposition (30f) einzugreifen, die in der Nähe eines Innenumfangs (15a) angeordnet ist, der eine mittige Öffnung in der Komponente (10) definiert.

6. Maschine (100) nach einem der vorstehenden Ansprüche, ferner mindestens eine Messvorrichtung (211) umfassend, die dazu ausgelegt ist, in Bezug zu einem durch die Basis (101) definierten fixierten Koordinatensystem eine Position mindestens eines Bezugspunkts (20) zu messen.

7. Maschine (100) nach Anspruch 6, wobei das Steuerungssystem (200) dazu ausgelegt ist, die Komponente (10) unter Verwendung der mindestens einen Messvorrichtung (211) auszumessen und den Bearbeitungsvorgang auf Grundlage der Ausgabe der mindestens einen Messvorrichtung (211) zu bestimmen.

8. Verfahren zum Abrichten einer gestanzten oder gegossenen Komponente (10) für ein Fahrzeug unter Verwendung einer Maschine (100) nach einem der vorstehenden Ansprüche, wobei das Verfahren Folgendes umfasst:
Aufnehmen (1001) der Komponente (10) in der Maschine (100) ;
Einspannen (1002) der Komponente (10) an einem ersten, zweiten und dritten Bezugspunkt (20a, 20b, 20c) mit einer ersten, zweiten bzw. dritten Halterungsvorrichtung (120a, 120b, 120c) in der festgelegten räumlichen Ausrichtung;
Messen (1003) mindestens eines vierten Bezugspunkts (20d) der Komponente (10) oder einer Krümmungsposition (30) der Komponente (10) mittels mindestens einer Messvorrichtung (211) ;
Auswerten (1004) der Messwerte von der mindestens einen Messvorrichtung (211) bezüglich der Erfüllung festgelegter Abmessungsanforderungen;
Aufbringen einer aufwärts und abwärts wirkenden Kraft mittels einer Krümmungsvorrichtung, um die Komponente plastisch zu verformen;
Einspannen des vierten Bezugspunkts (20d) an einer Position, die die Abmessungsanforderungen erfüllt, mittels der gelenkigen Halterungsvorrichtung (120d);
Bestimmen (1004c) des Bearbeitungsvorgangs auf Grundlage der Messwerte und
Durchführen (1005) des Bearbeitungsvorgangs, der dazu ausgelegt ist, die Komponente (10) in die Abmessungsanforderungen zu bringen.

9. Verfahren nach Anspruch 8, ferner das Bewegen des vierten Bezugspunkts (20d) zur Zielposition mittels der gelenkigen Halterungsvorrichtung (120d) umfassend.

10. Verfahren nach Anspruch 8 oder Anspruch 9, ferner das Bewegen mehrerer Krümmungspositionen (30a...30e) mittels mehrerer zugehöriger Krümmungsvorrichtungen (130) umfassend.

11. Verfahren nach Anspruch 9 oder Anspruch 10, ferner das Bestimmen der maximalen Verlagerungsparameter umfassend, sodass die Bewegung des vierten Bezugspunkts (20d) oder der mehreren Krümmungspositionen (30a...30e) zu einer maximalen Verlagerung auf Grundlage der maximalen Verlagerungsparameter zu einer plastischen Verformung der Komponente (10) führt.

12. Verfahren nach Anspruch 11, wobei die maximale Verlagerung eine Position definiert, die nicht die Abmessungsanforderungen erfüllt.

13. Verfahren nach einem der Ansprüche 8 bis 12, ferner das Messen eines vierten Bezugspunkts (20d) der Komponente (10) und/oder einer Krümmungsposition (30) der Komponente (10) mittels der mindestens einen Messvorrichtung (211) und
das Durchführen eines zusätzlichen Bearbeitungsvorgangs, falls die Messwerte von der mindestens einen Messvorrichtung (211) die Abmessungsanforderungen nicht erfüllen, umfassend.

## Revendications

1. Machine (100) pour le pliage d'un composant (10) coulé ou embouti de façon à le rendre conforme à des exigences de dimensions et de tolérances, la machine (100) comprenant :
une base (101) ;
au moins un dispositif de maintien fixe (120) accouplé à la base (101) et conçu pour serrer un repère (20) correspondant du composant (10) ;
au moins un dispositif de pliage (130) accouplé à la base (101) et conçu pour être appliqué au niveau d'un repère de pliage (20) correspondant du composant (10) ;
un dispositif de maintien articulé (120d) conçu pour serrer le composant (10) au niveau d'un repère articulé (20d) correspondant et conçu pour déplacer le repère articulé (20d) jusqu'à un emplacement cible ;
et
un système de commande (200) conçu pour commander l'au moins un dispositif de maintien fixe (120) et l'au moins un dispositif de pliage (130) pendant une procédure de manipulation ;
dans laquelle l'au moins un dispositif de maintien fixe (120) est conçu pour maintenir le composant (10) dans une orientation spatiale prédéterminée par rapport à la base (101) ; et
dans laquelle l'au moins un dispositif de pliage (130) est conçu pour appliquer une force vers le haut et vers le bas afin de déformer plastiquement le composant (10) .

2. Machine (100) selon la revendication 1, dans laquelle le dispositif de maintien articulé (120d) est conçu pour maintenir le repère articulé (20d) à l'emplacement cible pendant la procédure de manipulation.

3. Machine (100) selon la revendication 2, dans laquelle l'au moins un dispositif de maintien fixe (120) comprend des premier, deuxième et troisième dispositifs de maintien fixes (120a, 120b, 120c) conçus pour maintenir le composant (10) respectivement au niveau de premier, deuxième et troisième repères (20) ; et
dans laquelle les premier, deuxième et troisième dispositifs de maintien fixes (120a, 120b, 120c) et le dispositif de maintien articulé (120d) sont placés à proximité d'une périphérie extérieure (10a) du composant (10) .

4. Machine (100) selon la revendication 3, dans laquelle l'au moins un dispositif de pliage (130) comprend quatre dispositifs de pliage (130a, 130b), chaque dispositif de pliage étant conçu pour être appliqué au niveau d'un emplacement de pliage (30a... 30e) disposé à proximité de la périphérie extérieure (10a) du composant (10), entre des dispositifs quelconques parmi les premier, deuxième et troisième dispositifs de maintien fixes (120a, 120b, 120c) et le dispositif de maintien articulé (120d).

5. Machine (100) selon l'une quelconque des revendications précédentes, dans laquelle l'au moins un dispositif de pliage (130) est conçu pour être appliqué au niveau d'un emplacement de pliage (30f) disposé à proximité d'une périphérie intérieure (15a) définissant une ouverture centrale dans le composant (10).

6. Machine (100) selon l'une quelconque des revendications précédentes, comprenant en outre au moins un dispositif de mesure (211) conçu pour mesurer, par rapport à un système de coordonnées fixe défini par la base (101), un emplacement d'au moins un repère (20).

7. Machine (100) selon la revendication 6, dans laquelle le système de commande (200) est conçu pour mesurer le composant (10) au moyen de l'au moins un dispositif de mesure (211) et déterminer la procédure de manipulation sur la base d'une sortie de l'au moins un dispositif de mesure (211).

8. Procédé de dressage d'un composant (10) embouti ou coulé pour un véhicule au moyen d'une machine (100) selon l'une quelconque des revendications précédentes, le procédé comprenant :
recevoir (1001) le composant (10) dans la machine (100) ;
serrer (1002) le composant (10) au niveau de premier, deuxième et troisième repères (20a, 20b, 20c) respectivement au moyen de premier, deuxième et troisième dispositifs de maintien (120a, 120b, 120c) dans l'orientation spatiale prédéterminée ;
mesurer (1003) au moyen d'au moins un dispositif de mesure (211), au moins l'un d'un quatrième repère (20d) du composant (10) et d'un emplacement de pliage (30) du composant (10) ;
évaluer (1004) des mesures provenant de l'au moins un dispositif de mesure (211) afin de déterminer leur conformité avec des exigences de dimensionnelles prédéterminées ;
appliquer, au moyen d'un dispositif de pliage, une force vers le haut et vers le bas afin de déformer plastiquement le composant ;
serrer, au moyen du dispositif de maintien articulé (120d), le quatrième repère (20d) dans une position en conformité avec les exigences dimensionnelles ;
déterminer (1004c), sur la base des mesures, la procédure de manipulation ; et
exécuter (1005) la procédure de manipulation conçue pour rendre le composant (10) conforme aux exigences dimensionnelles.

9. Procédé selon la revendication 8, comprenant en outre le fait de déplacer le quatrième repère (20d) au moyen du dispositif de maintien articulé (120d) jusqu'à l'emplacement cible.

10. Procédé selon la revendication 8 ou la revendication 9, comprenant en outre le fait de déplacer une pluralité d'emplacements de pliage (30a... 30e) au moyen d'une pluralité de dispositifs de pliage (130) correspondants.

11. Procédé selon la revendication 9 ou la revendication 10, comprenant en outre le fait de déterminer des paramètres de changement de position maximal, tels qu'un déplacement du quatrième repère (20d) ou de la pluralité d'emplacements de pliage (30a... 30e) jusqu'à un changement de position maximal sur la base des paramètres de changement de position maximal se traduise par une déformation plastique du composant (10).

12. Procédé selon la revendication 11, dans lequel le changement de position maximal définit une position non conforme aux exigences dimensionnelles.

13. Procédé selon l'une quelconque des revendications 8 à 12, comprenant en outre le fait de mesurer, au moyen de l'au moins un dispositif de mesure (211), l'au moins un d'un quatrième repère (20d) du composant (10) et d'un emplacement de pliage (30) du composant (10) ; et
le fait d'exécuter une procédure de manipulation supplémentaire si les mesures provenant de l'au moins un dispositif de mesure (211) ne sont pas en conformité avec les exigences dimensionnelles.
